# EUROPÄISCHE PATENTSCHRIFT

(11) **EP 0 818 909 B1**
(45) Veröffentlichungstag und Bekanntmachung des Hinweises auf die Patenterteilung: **07.12.2005**
(21) Anmeldenummer: 97111010.1
(22) Anmeldetag: 02.07.1997
(51) Int. Cl.: H04M 1/00, H04M 1/02

(54) **Modulares Kommunikations-Endgerät**
Modular communication terminal
Terminal de communication modulaire

(30) Priorität: 12.07.1996 DE 19628072
(43) Veröffentlichungstag der Anmeldung: 14.01.1998
(73) Patentinhaber: DeTeWe Systems GmbH, 10997 Berlin (DE)
(72) Erfinder: Antonov, Iavor, Dr., 10117 Berlin (DE); Lenz, Raymond, 13347 Berlin (DE); Merz, Eberhard, 12163 Berlin (DE); Romahn, Jörg, 12353 Berlin (DE); Trebisz, Andrzey, 10318 Berlin (DE)

(56) Entgegenhaltungen:
- WO-A-95/22183
- DE-A- 19 526 730
- DE-C- 4 239 656
- US-A- 5 349 640

## Beschreibung

Die Erfindung betrifft ein Verfahren zum Sicherstellen der Funktionalität eines modular aufgebauten Kommunikations-Endgerätes, das aus einem Basisgerät und austauschbaren Modulen besteht.

Kommunikations-Endgeräte, wie beispielsweise Telefone, sind langfristige Wirtschaftsgüter. Daher besteht der Bedarf, sie jeweils auf dem neuesten technischen Stand zu halten bzw. ihre Funktionen zu erweitern. Hierzu ist bekannt, die Teilnehmereinrichtungen modular zu gestalten (DE 42 39 656). Die Module besitzen dabei eigene Steuereinheiten und ihre Kommunikation untereinander geschieht mittels Steuerprogrammen über ein BUS-System. Es können neue Module mit neuen Leistungsmerkmalen hinzugefügt werden, jedoch ist eine Zusammenarbeit zwischen den Modulen bei noch nicht vorhersehbaren Leistungenerkmalen der Zukunft nicht gewährleistet, da jedes Modul nur die eigenen Funktionen und deren Programmanteile umfaßt. Aufgrund neuer Module können sich somit auch Eigenschaften des Basisgerätes ändern, wie Funktionstastenbelegungen und Displaysteuerungen sowie diverse zusätzliche Funktionen. Dies kann zu Konflikten in der Zusammenarbeit des Basisgerätes und der Module führen.

Aus der US-Patentschrift 5,349,640 ist ebenfalls ein digitales Telefon bekannt, an das Zusatzmodule anschließbar sind. Diese Zusatzmodule werden Benutzer installiert.

Der Erfindung lag daher die Aufgabe zugrunde, für ein Basisgerät, das mehrere Plätze für Erweiterungsmodule enthält, eine Lösung zu finden, die sicherstellt, daß auch zur Zeit noch nicht bekannte Module mit noch nicht auf Kundenanforderungen spezifizierten Leistungsmerkmalen von der Steuerung des Basisgerätes bedient werden können. Dabei soll der Einsatz der Module durch einfaches Stecken durch den Kunden ohne Vornahme irgendwelcher Konfigurationen ermöglicht sein.

Diese Aufgabe ist durch die Erfindung gelöst, wie sie im Kennzeichnungsteil des ersten Patentanspruches dargelegt ist. Weitere vorteilhafte Maßnahmen sind Gegenstand der Unteransprüche.

Ein Kommunikations-Endgerät gemäß der Erfindung ist als Basisgerät mit steckbaren Modulen ausgelegt. Diese steckbaren Module können beispielsweise als Teile von Gehäuseabdeckungen ausgebildet sein (z. B. EP 0 817 449). Mit dem Stecken eines Modules wird die Software des Basisgerätes außer Betrieb gesetzt und die Software des gesteckten Moduls aktiviert. Letztere enthält die Basis- und die Modulsoftware. Eine solche Lösung ist für ein Basisgerät mit nur einem Modul anwendbar. Zwei Module mit gleicher Priorität können als Steuerprogramme für zwei unterschiedliche Module nicht abgestimmt laufen.

Da die Entwicklung der Module nacheinander geschieht, enthält Jedes neue Modul immer sämtliche Steuerprogrammanteile der schon vorhandenen Module und hat somit die höchste Priorität. Das Modul mit der höchsten Priorität übernimmt in einem Gerät mit seiner Software die Steuerung des gesamten Gerätes. Hierzu sind zwei Verfahren anwendbar:
1. Das Modul mit der höchsten Priorität muß immer auf dem ersten Modulsteckplatz eingesetzt werden. Durch Schließen einer Brücke wird die Software des Basisgerätes außer Betrieb genommen.
2. Beim Stecken eines Moduls wird ein Prüfen der Software aller gesteckten Module vorgenommen, und nach der Auswahl des Moduls wird mit der höchsten Priorität das Unwirksamschalten der Software des Basisgerätes und der der Module mit der niedrigen Priorität ausgeführt.

Das Modul mit der höchsten Priorität testet Konflikte mit bestehenden Modulen und verändert die Funktionalität der Module mit niedriger Priorität und die des Basisgerätes. Somit ist eine Nachrüstung eines modularen Kommunikations-Endgerätes mit überholtem Software-Standard seiner Module möglich.

## Patentansprüche

1. Verfahren zum Sicherstellen der Funktionalität eines modular aufgebauten Kommunikations-Endgerätes, das aus einem Basisgerät mit zumindest zwei Modulsteckplätzen besteht,
**dadurch gekennzeichnet, dass**
- mit dem Stecken eines Moduls in einen der Modulsteckplätze von den in das Kommunikations-Endgerät eingesteckten Modulen dasjenige Modul ermittelt wird, das sämtliche Steuerprogrammanteile der übrigen in das Kommunikations-Endgerät eingesteckten Module enthält und somit die höchste Priorität aufweist,
- die Software des Moduls mit der höchsten Priorität aktiviert wird und
- das Modul mit der höchsten Priorität die Steuerung des gesamten Kommunikations-Endgerätes übernimmt.

2. Verfahren nach Anspruch 1, **dadurch gekennzeichnet, dass**
- beim Stecken eines Moduls in das Kommunikations-Endgerät ein Prüfen der Software aller in das Kommunikations-Endgerät eingesteckten Module und des Basisgeräts vorgenommen wird,
- die Software mit der höchsten Priorität bestimmt wird und
- das Modul mit derjenigen Software, die die höchste Priorität aufweist, die Steuerung des Kommunikations-Endgerätes übernimmt.

3. Verfahren nach Anspruch 1, **dadurch gekennzeichnet, dass** das in den ersten Modulsteckplatz eingesteckte Modul als das Modul mit der höchsten Priorität behandelt wird.

4. Verfahren nach einem der voranstehenden Ansprüche 1 bis 3, **dadurch gekennzeichnet, dass** die Software des Moduls mit der höchsten Priorität
- Konflikte mit den übrigen gesteckten Modulen testet und
- die Funktionalität der Module mit niedrigerer Priorität und des Basisgeräts ändert.

5. Verfahren nach einem der voranstehenden Ansprüche, **dadurch gekennzeichnet, dass** das Modul mit der höchsten Priorität die Software des Basisgeräts und die Software der übrigen Module mit niedrigerer Priorität unwirksam schaltet.

## Claims

1. Method for ensuring the functionality of a modular communication terminal which comprises a basic appliance with at least two module plug-in slots,
**characterized in that**
- when a module is inserted into one of the module plug-in slots, that module from the modules which have been inserted into the communication terminal is determined which contains all the control program components of the other modules which have been inserted into the communication terminal, and which thus has the highest priority,
- the software of the module with the highest priority is activated, and
- the module with the highest priority controls the entire communication terminal.

2. Method according to Claim 1, **characterized in that**
- when a module is inserted into the communication terminal, a check is carried out of the software in all of the modules which have been inserted into the communication terminal, and of the basic appliance,
- the software with the highest priority is determined, and
- the module with that software which has the highest priority controls the communication terminal.

3. Method according to Claim 1, **characterized in that** the module which is inserted into the first module plug-in slot is treated as the module with the highest priority.

4. Method according to one of the preceding Claims 1 to 3, **characterized in that** the software in the module with the highest priority
- tests for conflicts with the other inserted modules, and
- changes the functionality of the modules with a lower priority and of the basic appliance.

5. Method according to one of the preceding claims, **characterized in that** the module with the highest priority switches the software in the basic appliance and the software in the other modules with lower priority to be inactive.

## Revendications

1. Procédé pour garantir la fonctionnalité d'un terminal de communication à structure modulaire qui se compose d'un appareil de base et d'au moins deux emplacements pour modules, **caractérisé en ce que**
- lors de l'insertion d'un module dans l'un des emplacements pour module des modules insérés dans le terminal de communication, il est déterminé celui qui contient toutes les parties du programme de commande des autres modules insérés dans le terminal de communication et ainsi qui présente la priorité la plus élevée,
- le logiciel du module ayant la priorité la plus élevée est activé et
- le module ayant la priorité la plus élevée prend en charge la commande de l'ensemble du terminal de communication.

2. Procédé selon la revendication 1, **caractérisé en ce que**
- lors de l'insertion d'un module dans le terminal de communication, il se produit un contrôle des logiciels de tous les modules insérés dans le terminal de communication et de l'appareil de base,
- le logiciel ayant la priorité la plus élevée est déterminé et
- le module ayant le logiciel qui présente la priorité la plus élevée prend en charge la commande du terminal de communication.

3. Procédé selon la revendication 1, **caractérisé en ce que** le module inséré dans le premier emplacement pour module est considéré comme le module ayant la priorité la plus élevée.

4. Procédé selon l'une des revendications 1 à 3, **caractérisé en ce que** le logiciel du module ayant la priorité la plus élevée
- teste les conflits avec les autres modules enfichés et
- modifie la fonctionnalité du module ayant la priorité la plus faible et de l'appareil de base.

5. Procédé selon l'une des revendications précédentes, **caractérisé en ce que** le module ayant la priorité la plus élevée désactive le logiciel de l'appareil de base et le logiciel de l'autre module ayant la priorité la plus faible.
